# EUROPÄISCHE PATENTSCHRIFT

(11) **EP 2 812 637 B1**
(45) Veröffentlichungstag und Bekanntmachung des Hinweises auf die Patenterteilung: **03.02.2016**
(21) Anmeldenummer: 12794897.4
(22) Anmeldetag: 14.11.2012
(51) Int. Cl.: F24F 11/00, F24F 1/00, F24F 3/16, F24F 7/04, F24F 7/007

(54) **LÜFTUNGSGERÄT FÜR REINRAUMANWENDUNGEN**
VENTILATION DEVICE FOR CLEAN ROOM APPLICATIONS
APPAREIL DE VENTILATION POUR APPLICATIONS DANS SALLE BLANCHE

(30) Priorität: 10.02.2012 DE 202012100465 U
(43) Veröffentlichungstag der Anmeldung: 17.12.2014
(73) Patentinhaber: Daldrop + Dr. Ing. Huber GmbH&Co. Kg, 72666 Neckartailfingen (DE)
(72) Erfinder: OSWALD, Josef, 72666 Neckartailfingen (DE)
(74) Vertreter: Rüger, Barthelt & Abel
(86) Internationale Anmeldenummer: PCT/EP2012/072618
(87) Internationale Veröffentlichungsnummer: WO 2013/117254

(56) Entgegenhaltungen:
- EP-A2- 0 990 858
- US-A1- 2006 021 375

## Beschreibung

Die vorliegende Erfindung betrifft ein Lüftungsgerät zur Be- und Entlüftung eines Raums, insbesondere eines Reinraums.

Reinräume dieser Art, die die vorliegende Erfindung insbesondere betrifft, werden vorwiegend im Bereich der Pharmazie, Biotechnologie und in der Mikroelektronik verwendet. In den Reinräumen müssen Operationen oder Produktionsprozesse aus verschiedenen Gründen in abgeschlossenen Bereichen unter kontrollierten Bedingungen durchgeführt werden. Abhängig von der Anwendung und den damit verbunden Anforderungen können verschiedene Parameter, wie bspw. die Lufttemperatur, die Luftfeuchte, der Raumdruck, die Partikel- und Keimzahl, in den Reinräumen gezielt beeinflusst bzw. kontrolliert werden. Je nach dem erforderlichem Reinheitsgrad, Überdruck oder Unterdruck in dem Reinraum etc. sind unterschiedliche Reinraumklassen bekannt und normiert.

Zur Aufrechterhaltung eines oder mehrerer der vorstehend erwähnten Parameter in einem Reinraum werden spezielle Lüftungssysteme verwendet. Diese müssen trotz auftretender Störgrößen, wie z.B. Wärme-, Feuchte- und Stofflasten, für die Einhaltung der vorgegebenen Parameterwerte sorgen.

Aus der Praxis sind Lüftungssysteme für Reinräume in unterschiedlichen Konfigurationen bekannt. Im Allgemeinen handelt es sich um verteilte Systeme mit mehreren Funktionseinheiten, die bspw. in einem Zwischendeckenbereich über einem Reinraum, z.B. auf einer begehbaren Reinraumdecke, verteilt montiert und miteinander strömungstechnisch verbunden werden. Meist ist eine Lüfterfiltereinheit vorhanden, die einen Lüfter und bspw. einen Schwebstofffilter aufweist, um über eine Zufuhrleitung saubere Luft in den Reinraum einzubringen. Die saubere Luft wird dem Raum mit einer relativ hohen Strömungsgeschwindigkeit zugeführt, um einen je nach Bedarf sehr hohen Luftaustausch zu ermöglichen. Manche Systeme ermöglichen einen bis zu 400-maligen Luftaustausch pro Stunde, was entsprechend hohe Strömungsgeschwindigkeiten erfordert. Über eine weitere Einheit, die ebenfalls einen Luftfilter aufweisen kann, wird verbrauchte Abluft aus dem Reinraum abgeführt. Diese Abluftabführeinheit ist dann meist mit einem Luftaufbereiter strömungsmäßig verbunden, der die Abluft geeignet konditioniert und insbesondere mit frischer Außenluft vermischt, um aufbereitete, saubere Luft für die Lüfterfiltereinheit bereitzustellen. Es kann ferner ein Kühler oder ein Heizgerät zur thermischen Behandlung der dem Reinraum zuzuführenden Zuluft vorgesehen sein.

All diese Funktionseinheiten sind über ein verzweigtes Kanalnetz strömungsmäßig miteinander verbunden, das die jeweiligen Luftströme führt. Die Volumenströme werden mit Hilfe von in dem Kanalsystem verteilt angeordneten Regelventilen und durch Steuerung der für den Lufttransport sorgenden Lüfter geregelt. Hierzu ist eine von den Funktionseinheiten gesonderte, diesen übergeordnete Steuerung vorgesehen, die mit Hilfe zugehöriger Sensoren und Steuerlogik die vorgegebenen Parameter in dem Reinraum, wie Temperatur, Druck etc. kontrolliert, überwacht und regelt.

Ein derartiges Lüftungssystem weist einen komplexen Aufbau auf, der einen erheblichen Platzbedarf für die verschiedenen Funktionseinheiten, das Kanalnetz, die Sensoren und die Steuerung erfordert. Außerdem ist der Aufwand für Installation und Inbetriebnahme bedingt durch die zahlreichen Anschlussverbindungen, die geschaffen werden müssen, die relativ aufwendige Vorverdrahtung und Vorparametrierung verhältnismäßig hoch. Auch die Instandhaltung und Wartung eines derartigen verteilten Systems gestalten sich schwierig. Im Betrieb können bei der Abstimmung der Funktionseinheiten aufeinander und deren Regelung Probleme auftreten.

Es sind auch so genannte "Fan-Filter-Units" bekannt, die eine kombinierte Einheit aus einem Ventilator und einem Schwebstofffilter sowie evtl. einem Kühler bilden und in der Decke eines Raumes eingebaut werden können. Derartige Umluftgeräte vereinfachen insofern den Aufbau eines Lüftungssystems, als sie sowohl für die Zufuhr der Zuluft zu dem Raum als auch für die Abfuhr der Abluft mit einem einzigen Umluftgerät sorgen. Die Zuführung von Außenluft erfolgt jedoch in einem gesonderten Luftaufbereiter, mit dem das Umluftgerät strömungsmäßig zu verbinden ist. Außerdem sind die Volumenstromregler und die zugehörige Intelligenz für die Kontrolle, Überwachung und Steuerung außerhalb des Umluftgerätes angeordnet, was mit den vorstehenden Unzulänglichkeiten bzw. Nachteilen verbunden sein kann.

US 2006/0021375 A1 beschreibt ein Lüftungsgerät zur Be- und Entlüftung eines Raums, insbesondere Reinraums, mit einem Gehäuse, das einen Innenraum definiert, in dem ein Durchgangskanal, ein Ventilator und Filtermittel angeordnet sind. Der Durchgangskanal erstreckt sich von einem an dem Gehäuse vorgesehen Ablufteinlass für aus dem Raum abgeführte Abluft durch den Innenraum hindurch bis zu einem an dem Gehäuse vorgesehenen Zuluftauslass, der zur Zuführung von Zuluft zu dem Raum dient. Der Ventilator ist in dem Durchgangskanal angeordnet, um Luft aus einer mit dem Ablufteinlass strömungsmäßig verbundenen ansaugseitigen Kammer zu einer mit dem Zuluftauslass strömungsmäßig verbundenen druckseitigen Kammer zu befördern. Die Filtermittel reinigen die Luft beim Durchströmen des Durchgangskanals und machen sie keimfrei. Das Lüftungsgerät ist eingerichtet, um entweder Zuluft zu dem Raum zuzuführen oder Abluft aus diesem abzuführen und wahlweise einen Überdruck oder einen Unterdruck in dem Raum zu schaffen.

Es besteht der Wunsch, die unterschiedlichen Funktionseinheiten weiter zu kombinieren, um möglichst kompakte, integrierte Lüftungsgeräte zu schaffen, die den Aufwand für Installation, Inbetriebnahme und Wartung reduzieren können. Allerdings stellen verschiedene Reinräume bedingt durch die unterschiedlichen Anwendungen, Vorschriften und erforderlichen Reinheitsgrade unterschiedliche Anorderungen an die Be- und Entlüftung. Zudem können wechselnde Produktionsprozesse und Reinraumausstattung ebenfalls unterschiedliche Anorderungen an die Be- und Entlüftung bedingen. Insofern scheint es schwierig, ein universelles Kompaktgerät zur Be- und Entlüftung von Reinräumen zu schaffen, das derart vielfältige Anforderungen erfüllen kann.

Ausgehend hiervon ist es eine Aufgabe der vorliegenden Erfindung, die vorstehend erwähnten Unzulänglichkeiten herkömmlicher Lüftungssysteme für Reinräume zu beseitigen oder zu verringern und ein möglichst kompaktes, integriertes Lüftungsgerät zu schaffen, das sich für Reinraumanwendungen eignet. Insbesondere ist es Aufgabe der vorliegenden Erfindung, ein kompaktes Lüftungsgerät zu schaffen, das unterschiedliche Anforderungen an die Be- und Entlüftung, die unterschiedliche Reinräume je nach Anwendung, Vorschriften und Reinheitsklassen stellen, erfüllen kann. Dabei sollte das Lüftungsgerät bei einfachem Aufbau eine einfache Installation, Instandhaltung und Inbetriebnahme sowie einen einfachen Betrieb des Lüftungsgerätes ermöglichen.

Diese Aufgabe wird gemäß der Erfindung mit dem Lüftungsgerät zur Be- und Entlüftung eines Raums, das die Merkmale des Patentanspruchs 1 aufweist, gelöst.

Erfindungsgemäß weist das Lüftungsgerät, das insbesondere zur Be- und Entlüftung eines Reinraums vorgesehen ist, ein Gehäuse auf, das einen Innenraum definiert, in dem unterschiedliche Komponenten angeordnet sind. Insbesondere ist in dem Innenraum ein Durchgangskanal angeordnet, der sich von einem an dem Gehäuse vorgesehen Ablufteinlass für aus dem Raum abgeführte Abluft durch den Innenraum hindurch bis zu einem an dem Gehäuse vorgesehenen Zuluftauslass erstreckt, der zur Zuführung von Zuluft zu dem Raum dient. Ferner ist in dem Innenraum ein Ventilator vorgesehen, der in dem Durchgangskanal angeordnet ist, um Luft aus einer mit dem Ablufteinlass strömungsmäßig verbundenen ansaugseitigen Kammer zu einer mit dem Zuluftauslass strömungsmäßig verbundenen druckseitigen Kammer zu befördern. Ferner ist in dem Innenraum ein Außenluftkanal angeordnet, der mit einem an dem Gehäuse vorgesehenen Außenluftanschluss strömungsmäßig verbunden ist, um Außenluft aufzunehmen, und der einen Außenluftaustritt aufweist, um Außenluft in den Durchgangskanal auszugeben. Außerdem ist in dem Innenraum ein Fortluftkanal angeordnet, der einen mit dem Durchgangskanal strömungsmäßig verbundenen Fortlufteintritt, um einen Teil der aus dem Raum abgeführten Abluft als Fortluft aufzunehmen, und einen an dem Gehäuse vorgesehen Fortluftanschluss aufweist, um die aufgenommene Fortluft aus dem Gehäuse nach außen zu befördern. Gemäß der Erfindung ist der Ventilator in dem Durchgangskanal in seiner Drehzahl regelbar. Außerdem sind in dem Außenluftkanal ein erster Volumenstromregler und in dem Fortluftkanal ein zweiter Volumenstromregler eingebaut. Eine Steuereinrichtung ist eingerichtet, um den Betrieb des ersten und des zweiten Volumenstromreglers und die Drehzahl des Ventilators je nach Anforderungen zu steuern.

Gemäß der Erfindung ist somit ein universelles, kompaktes Lüftungsgerät geschaffen, das die wichtigsten Funktionseinheiten, wie den drehzahlregelbaren Ventilator für den Transport der Zuluft, den Außenluftkanal zur Beimischung frischer Außenluft und den Forluftkanal zur gleichzeitigen Abführung von Raumluft als Fortluft in platzsparender und strömungsgünstiger Anordnung vereinigt. Mit den integrierten Volumenstromreglern und der Steuereinrichtung, die die erforderliche Intelligenz zur Überwachung, Kontrolle und Steuerung aller Funktionseinheiten des Lüftungsgerätes aufweist, ist das Lüftungsgerät in der Lage, unterschiedliche Anforderungen an Reinräume, wie Reinheitsklassen, Druckverhältnisse, zu erreichen und aufrecht zu erhalten.

Das erfindungsgemäße Lüftungsgerät weist vorzugsweise ein längliches, quaderförmige Gehäuse mit einer Oberseite, einer Unterseite, einer ersten und einer zweiten Längsseite auf, die einander gegenüberliegen und die Oberseite mit der Unterseite verbinden, wobei die Oberseite, die Unterseite und die Längsseiten nach außen verschlossen sind. Die verbleibenden einander gegenüberliegenden Schmalseiten des Gehäuses sind wenigstens teilweise offen ausgebildet und bilden den Ablufteinlass bzw. den Zuluftauslass, so dass der Durchgangskanal in Längsrichtung des Gehäuses zwischen diese Schmalseiten verläuft.

In einer bevorzugten Ausführungsform weist das Gehäuse eine stabile tragende Rahmenkonstruktion auf, die zur Minimierung des Gewichts des Lüftungsgerätes vorzugsweise aus einem Leichtmetall, wie bspw. Aluminium, ausgebildet ist. Ferner weist das Gehäuse Gehäusedeckel auf, die wenigstens die Oberseite, die Unterseite und die Längsseiten des Lüftungsgerätes dichtend verschließen. Die Gehäusedeckel sind aus einem reinraumtauglichen Material, vorzugsweise aus Hochdruck-Schichtpressstoffplatten, die aus Schichten von Fasern auf Holzbasis bestehen, mit thermohärtenden Harzen imprägniert sein und eine Oberflächenbeschichtung aufweisen können, jedenfalls für Reinraumanwendungen gegen Chemikalien und Desinfektionsmittel hinreichend widerstandsfähig, abriebfest und korrosionsbeständig sind und keine schädlichen Gase oder Stäube freisetzen. Die Gehäusedeckel können durch Schraubverbindungen an den Leichtmetallprofilen befestigt sein. In die Gehäusedeckel eingelassene Dichtschnuren dichten den Innenraum nach außen luftdicht ab.

Der Ventilator ist vorzugsweise zentral in einer Trennwand montiert, die sich quer durch den Durchgangskanal erstreckt und die ansaugseitige Kammer von der druckseitigen Kammer trennt. Der Ventilator weist eine Einlaufdüse auf, die in dem Durchgangskanal der zuströmenden Abluft zugewandt, also entgegengesetzt zu der Strömungsrichtung der Zuluft in dem Durchgangskanal ausgerichtet ist.

Der Ventilator weist eine drehzahlregelbare Antriebseinrichtung auf, die vorzugsweise durch einen EC-Motor, also einen bürstenlosen, elektronisch kommutierten Gleichstrommotor gebildet ist. In einer Ausführungsform ist der Ventilator ein einseitig saugendes, Motor angetriebenes Radiallaufrad ohne Spiralgehäuse, das durch eine spezielle, rückwärts gekrümmte, profilierte Schaufelgestaltung mit rotierendem Diffusor für geringen Energiebedarf, hohen Wirkungsgrad und ein günstiges akustisches Verhalten optimiert ist. Der Antriebsmotor ist mit der Steuereinrichtung betriebsmäßig gekoppelt, die seine Drehzahl kontinuierlich regelt, um einen vorgegebenen Volumenstrom der Zuluft zu erreichen und aufrechtzuerhalten. Durch die Drehzahlregelung kann unabhängig von der Güte und/oder dem Verschmutzungsgrad etwaiger Schwebstofffilter, die an dem Ablufteinlass und/oder dem Zuluftauslass vorgesehen sein können, der Volumenstrom in dem Durchgangskanal konstant gehalten werden. In einer Ausführungsform ist die Luftmenge variabel zwischen 0 und 6000 m³/h einstellbar, wobei die Nennluftmenge des Ventilators in etwa 4200 m³/h beträgt. Dadurch ist ein sehr hoher Luftaustausch je nach Raumgröße von sogar mehreren Hundert Mal pro Stunde möglich.

Um die Zuluftbedarfsmenge genau regeln zu können, weist der Ventilator ferner eine Messeinrichtung zur Messung einer Größe, die den Volumenstrom der durch den Ventilator hindurch beförderten Luft kennzeichnet, auf, wobei die Messeinrichtung mit der Steuereinrichtung kommunikationsmäßig verbunden ist. Die Messeinrichtung liefert somit die den Volumenstrom kennzeichnenden Messsignale zu der Steuereinrichtung, die auf der Basis der erfassten Messsignale die Drehzahl des Ventilators kontinuierlich regelt. Die Messeinrichtung kann in Form eines Differenzdrucksensors in der Einlaufdüse des Ventilators integriert sein.

Der Außenluftkanal und der Fortluftkanal sind vorzugsweise durch Rohrleitungen gebildet, die in der Nähe des Ablufteinlasses des Lüftungsgerätes angeordnet sind, sich quer durch den Durchgangskanal und vorzugsweise parallel zueinander erstrecken und je nach Anordnung des Gerätes über- bzw. nebeneinander angeordnet sind. Die Rohrleitungen können einen Durchmesser von bspw. bis zu 25 cm oder sogar mehr aufweisen, um in Zusammenwirkung mit den integrierten Volumenstromreglern einen weiten Anforderungsbereich an die Beimischung von Außenluft und/oder die Abführung von Fortluft erfüllen zu können.

In einer besonders bevorzugten Ausführungsform der Erfindung sind der Außenluftaustritt und der Fortlufteintritt derart eingerichtet und angeordnet, dass bei gleichzeitiger Abführung der Fortluft und Beimischung der Außenluft kein Kurzschluss der Luftströme auftritt. Die Außenluft kann also nicht aus dem Außenluftaustritt unmittelbar in den Fortlufteintritt entweichen. Strömungsverluste der Außenluft werden somit vermieden. Die Zufuhr und Beimischung aufbereiteter Außenluft zur Frischluftversorgung der Personen in einen Reinraum bzw. als Ersatz für gegebenenfalls vorhandene Prozessfortluft kann mit hoher Effizienz und Präzision erfolgen. Ebenfalls kann ohne Kurzschluss der Luftströme auch genau die vorgegebene Menge Fortluft aus dem Gerät nach außen abgeführt werden, ohne erneut dem Raum zugeführt zu werden.

In einer bevorzugten Ausführungsform ist der Außenluftaustritt durch eine erste Perforation in einer Wand einer den Außenluftkanal bildenden Rohrleitung gebildet, und der Fortlufteintritt ist durch eine zweite Perforation in einer den Fortluftkanal bildenden Rohrleitung gebildet. Die erste und die zweite Perforation erstrecken sich über einen Umfangsbereich der jeweiligen Rohrleitung, der jeweils kleiner ist als 180°. Zur Vermeidung eines Kurzschlusses der Luftströme sind die erste und die zweite Perforation in entgegengesetzte Richtungen längs des Durchgangskanals ausgerichtet. Genauer gesagt, zeigt der Außenluftaustritt in Strömungsrichtung der Luft in dem Durchgangskanal, während der Fortlufteintritt zu der Strömungsrichtung entgegengesetzt gerichtet ist. Die Anzahl und Gesamtfläche der Perforationsöffnungen ist geeignet festgelegt, um einen bestimmten maximalen Anteil der Abluft entnehmen bzw. der Außenluft beimischen zu können. Die Rohrleitungen für den Außenluftkanal und den Fortluftkanal mit den integrierten Perforationen sind strömungsgünstig eingerichtet, um größere Störungen der durchströmenden Abluft in dem Durchgangskanal sowie Turbulenzen der Strömungen zu vermeiden.

Zur Regelung der Volumenströme der beigemischten Außenluft und der abgeführten Fortluft weisen der erste und der zweite Volumenstromregler jeweils eine veränderbare Durchflussbegrenzungseinrichtung, vorzugsweise eine verstellbare Drosselklappe in dem Außenluftkanal bzw. dem Fortluftkanal, auf, wobei ein Aktuator oder ein Stellantrieb zur Betätigung der jeweiligen Durchflussbegrenzungseinrichtung bzw. Drosselklappe vorgesehen ist. Der Aktuator ist mit der Steuereinrichtung betriebsmäßig gekoppelt, um Stellsignale von dieser zu empfangen, um z.B. die Drosselklappe für einen vorgegebenen Volumenstrom geeignet einzustellen. Um eine genaue Regelung zu ermöglichen, ist vorzugsweise ein Differenzdrucksensor in dem jeweiligen Kanal vorgesehen, der einen den jeweiligen Volumenstrom kennzeichnenden Differenzdruck erfasst und die jeweiligen erfassten Messwerte an die Steuereinrichtung liefert.

Das erfindungsgemäße Lüftungsgerät kann ferner eine Kühl-/Heizeinrichtung aufweisen, um die Zuluft vor der Zuführung zu dem Raum bedarfsgemäß thermisch zu behandeln. Die Kühl-/Heizeinrichtung ist vorzugsweise in dem Durchgangskanal stromabwärts von dem Ventilator angeordnet.

In einer Ausführungsform weist die Kühl-/Heizeinrichtung einen Wärmetauscher zum Kühlen/Erwärmen mit einem vorzugsweise flüssigem Wärmeübertragungsmedium, bevorzugt einen Wasser/ Luft-Wärmetauscher auf, der über Rohre mit an dem Gehäuse angeordneten Vorlauf- und Rücklaufanschlüssen verbunden ist.

Zur Regelung des Durchflusses des Wärmeübertragungsmediums, insbesondere Wasser, ist in dem Vorlauf oder Rücklauf des Wärmetauschers vorzugsweise ein Regelventil angeordnet. Das Regelventil wird z.B. über einen von der Steuereinrichtung ansteuerbaren Aktuator betätigt. Ein auf diese Weise konfiguriertes Lüftungsgerät ermöglicht somit die Regelung der Temperatur der zugeführten Zuluft und somit der Raumtemperatur.

Zur genauen Regelung der Raumtemperatur ist der Kühl-/ Heizeinrichtung vorzugsweise ein Temperaturfühler zugeordnet, der vorteilhafterweise ebenfalls in dem Lüftungsgerät integriert und in dem Durchgangskanal angeordnet ist, um die Temperatur der Abluft zu erfassen. Die Temperaturmesswerte werden an die Steuereinrichtung gesandt, die eine geeignete Steuerlogik aufweist, um auf der Basis der erfassten Temperaturmesswerte den Aktuator des Regelventils zur Regelung der Raumtemperatur geeignet anzusteuern. Dabei kann zusätzlich zu den Volumenströmen und damit den Druckverhältnissen in dem Raum auch die Temperatur des Raums genau konditioniert werden.

Das erfindungsgemäße Lüftungsgerät weist vorzugsweise eine Datenschnittstelle zur Eingabe sowie Speichermittel zur Speicherung von Parametersollwerten für die Steuereinrichtung auf, zu denen wenigstens die Sollwerte für den Volumenstrom der Zuluft, die Raumtemperatur, die beizumischende Außenluftmenge und die abzuführende Fortluftmenge gehören. Die Steuereinrichtung verwendet die vorgegebenen Parametersollwerte zur Regelung der jeweiligen Volumenströme sowie der Raumtemperatur.

Optional kann auch ein Sollwert für den Druck in dem zu belüftenden Raum vorgegeben und die Steuereinrichtung zur Steuerung der Volumenstromregler und des Ventilators, um den vorgegebenen Raumdrucksollwert zu erreichen, eingerichtet sein. In diesem Fall kann ein Drucksensor im Gerät installiert werden, dessen Sensorschlauch bis in den Raum geführt wird und bspw. über die Datenschnittstelle an die Steuereinrichtung angekoppelt werden, um momentane Messwerte des Raumdrucks zu liefern.

Das erfindungsgemäße Lüftungsgerät kann weitere Mittel, die die gewünschte Raumklimatisierung insbesondere in einem Reinraum unterstützen, wie bspw. Filtermittel, insbesondere Schwebstofffilter, zur Herausfilterung von Staub- und sonstigen Feststoffpartikeln aus der abgeführten Forluft und/oder aus der zugeführten Zuluft, enthalten. Die Steuereinrichtung kann ferner zur Überwachung der Filterverschmutzung von vor- bzw. nachgeschalteten Filtern, bspw. durch Überwachung der jeweiligen Druckverhältnisse eingerichtet sein. Vorteilhafterweise ist die Steuereinrichtung in der Lage, unabhängig von dem Verschmutzungsgrad derartiger Luftfilter durch die inneren Regelkreise in dem Lüftungsgerät die vorgeschriebenen zu- bzw. abzuführenden Luftmengen genau einzuhalten.

Die Steuereinrichtung kann auch für weitere Aufgaben, wie bspw. eine Schleusensteuerung von Personen- und/oder Materialschleusen, einschließlich einer gegenseitigen Türverriegelung, Ampelanzeige, Notfunktion und optionaler Einbindungen einer Zutrittskontrolle für den Zutritt zu einem Raum, eingerichtet sein. Dadurch kann der Anwendungsbereich des kompakten Lüftungsgeräts weiter vergrößert werden.

Für größere Räume können mehrere entsprechende Lüftungsgeräte vorgesehen und parallel betrieben werden. Die Geräte können über Datenleitungen miteinander verbunden werden, um Daten auszutauschen. Sie können in einer Master-Salve-Konfiguration arbeiten. Die Lüftungsgeräte können auch über eine Datenleitung mit einer Zentraleinheit verbunden und zentral verwaltet werden. Dies ermöglicht eine erweiterte Datenspeicherung sowie Weiterleitung von Daten auf übergeordnete Gebäudeautomationssysteme. Die Steuereinrichtung der Lüftungsgeräte ist vorzugsweise mit geeigneten standardisierten industriellen Busprotokollen eingerichtet, die eine Kommunikation mit anderen Geräten und/oder mit einer Zentraleinheit unterstützen.

Weitere vorteilhafte Einzelheiten und besondere Merkmale der Erfindung erschließen sich aus der folgenden Beschreibung bevorzugter Ausführungsformen der Erfindung, den beigefügten Zeichnungen und den Patentansprüchen. In den Zeichnungen sind Ausführungsformen der Erfindung lediglich zu Beispiels- und Veranschaulichungszwecken und nicht zur Beschränkung der Erfindung angegeben. Es zeigen:
Figur 1 eine perspektivische Darstellung einer Ausführungsform eines erfindungsgemäßen Lüftungsgeräts zur Be- und Entlüftung eines Reinraums in vereinfachter Darstellung;
Figur 2 das Lüftungsgerät nach Figur 1 in ähnlicher Perspektivdarstellung, jedoch bei abgenommenem seitlichen Gehäusedeckel, um einen Blick in den Innenraum des Lüftungsgerätes zu ermöglichen;
Figur 3 eine Draufsicht von vorne auf den Ablufteinlass des Lüftungsgerätes gemäß den Figuren 1 und 2;
Figur 4 eine vereinfachte ausschnittsweise Seitenansicht zur Veranschaulichung der Anordnung eines Außenluftaustritts und eines Fortlufteintritts gemäß einer beispielhaften Ausführungsform der Erfindung; und
Figur 5 eine Seitenansicht des Lüftungsgeräts gemäß den Figuren 1-4 mit Blick auf eine Längsseite bei abgenommenem Gehäusedeckel.

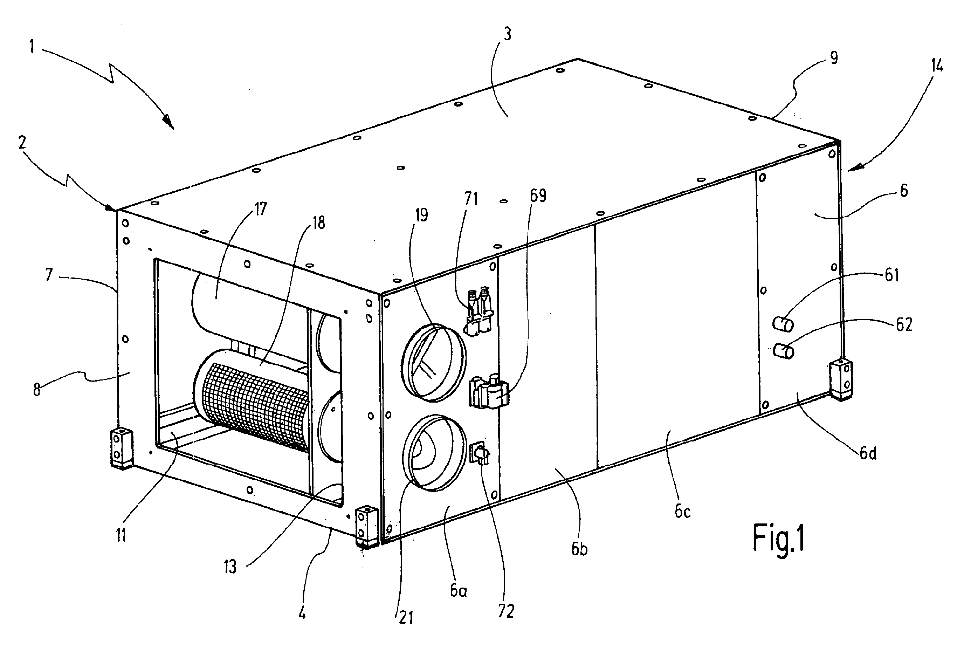

Figur 1 zeigt eine Perspektivansicht eines Lüftungsgerätes zur Be- und Entlüftung eines Raums, insbesondere eines Reinraums, gemäß einer bevorzugten Ausführungsform der Erfindung. Das Lüftungsgerät 1 weist ein Gehäuse 2 mit einer länglichen, quaderförmigen Form auf, das in der Darstellung gemäß den Figuren eine Oberseite 3, eine Unterseite 4, zwei Längsseiten 6, 7 und zwei Schmalseiten 8, 9 aufweist. Es ist jedoch verständlich, dass das Lüftungsgerät nicht unbedingt in der dargestellten horizontalen Lage verwendet werden muss, sondern auch in einer vertikalen Lage, bspw. mit der Schmalseite 9 nach oben ausgerichtet, verwendet werden kann.

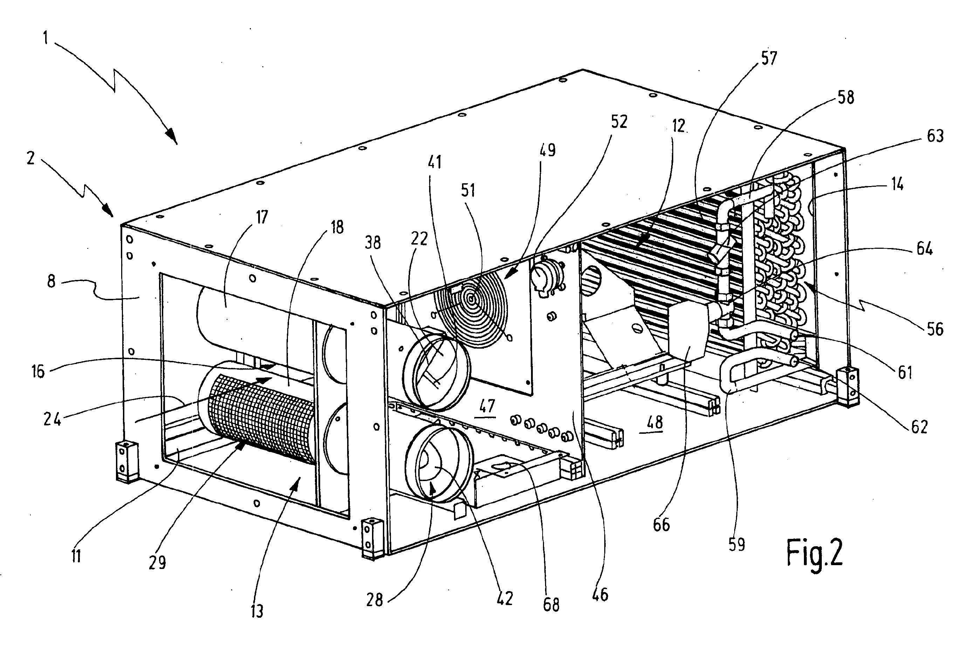

Die Gehäuseseiten 2-9 sind durch jeweilige Gehäusedeckel gebildet, die an einer tragenden Rahmenkonstruktion 11 dichtend befestigt, insbesondere angeschraubt sind. Die Rahmenkonstruktion 11, die hier in stabiler, jedoch leichter Bauweise aus Aluminium-Strangpressprofilen konstruiert ist, ist in Figur 1 angedeutet und insbesondere aus Figur 2 ersichtlich.

Die Gehäusedeckel 3, 4, 6-9 bestehen aus Hochdruck-Schichtpressstoffplatten mit einer Dicke von beispielsweise 10 mm, die aus Schichten von Fasern auf Holzbasis hergestellt sind und eine sehr widerstandsfähige Oberfläche, bspw. aus Melaminharz aufweisen. Die Platten bedürfen keiner schützenden Anstriche oder Versiegelungen, korrodieren nicht und geben keine schädlichen Gase oder Stäube ab. Sie sind widerstandsbeständig gegen Chemikalien und Desinfektionsmittel und erfüllen aufgrund ihrer spezifischen Materialeigenschaften und ihrer günstigen Verarbeitungsmöglichkeiten sämtliche Anforderungen für die Anwendung in Reinräumen.

Wie aus den Figuren 1 und 2 entnehmbar, sind die die Oberseite 3 und die Unterseite 4 bildenden Gehäusedeckel durch durchgehende Platten gebildet, die eine geschlossene Wand bilden. Ebenfalls ist der Gehäusedeckel 7, der die in den Figuren hintere, vom Betrachter abgewandte Längsseite bildet, durch eine durchgehende geschlossene Wand gebildet. Der auf der gegenüberliegenden Längsseite 6 befindliche Gehäusedeckel ist hier durch mehrere nebeneinander angeordnete Wandelemente 6a-d gebildet, die einzeln von der Rahmenkonstruktion 11 gelöst werden können, um Zugang zu einzelnen Bereichen des durch das Gehäuse 2 definierten Innenraums 12 zu schaffen. Durch den Gehäusedeckel 6 sind mehrere pneumatische, elektrische und hydraulische Anschlüsse herausgeführt, die nachstehend im Zusammenhang mit der Beschreibung der inneren Komponenten des Lüftungsgerätes 1 näher beschrieben sind.

Der Gehäusedeckel 8 auf der in den Figuren 1 und 2 dem Betrachter zugewandten Schmalseite weist die Form eines rechteckigen Rahmens auf, der im Wesentlichen nur die dahinter befindlichen Profile der Rahmenkonstruktion 11 bedeckt und eine zentrale Einlassöffnung 13 begrenzt, die in den Innenraum 12 hineinführt. Die Einlassöffnung 13 dient als Ablufteinlass, um Abluft aus dem zu be- und entlüftenden Raum abzuführen. Je nach Einsatzort kann an den Ablufteinlass 13 eine hier nicht näher dargestellte Leitung angeschlossen werden, die mit an geeigneten Stellen des Raums vorgesehenen Auslassöffnungen verbunden werden kann, um dort Abluft aus dem Raum abzuführen und zu dem Lüftungsgerät 1 zu befördern.

Der Gehäusedeckel 9 auf der gegenüberliegenden, in den Figuren 1 und 2 vom Betrachter abgewandten Schmalseite 9 des Gehäuses 2 ist ähnlich wie der Gehäusedeckel 8 in Form eines rechteckigen Rahmens ausgebildet, der eine hier nicht näher dargestellte Auslassöffnung 14 begrenzt, die den Innenraum 12 mit der Außenseite des Gerätes verbindet. Die Auslassöffnung 12 dient als Zuluftauslass, um dem zu belüfteten Raum Zuluft zuzuführen. Der Zuluftauslass 12 kann je nach Einsatzort wiederum über eine hier nicht näher veranschaulichte Leitung mit einer geeigneten Einlassöffnung oder mehreren Einlassöffnungen verbunden sein, die zu dem belüfteten Raum führt bzw. führen. Von der Einlassöffnung 13 zu der Auslassöffnung 14 erstreckt sich ein Durchgangskanal 16, der Rückluft führt, in Längsrichtung des Lüftungsgerätes 1 durch den gesamten Innenraum 12 hindurch.

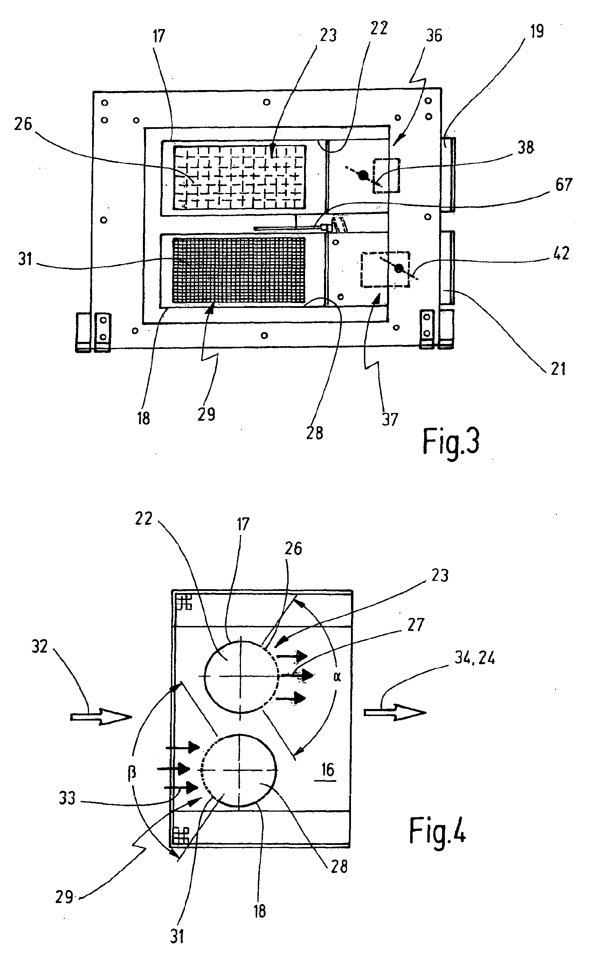

Die in dem Innenraum 12 angeordneten Komponenten des Lüftungsgerätes 1 sind insbesondere aus Figur 2 ersichtlich, die das Lüftungsgerät 1 bei abgenommenem Gehäusedeckel 6 zeigt, und in weiteren Einzelheiten in den Figuren 3-5 veranschaulicht. Wie veranschaulicht, weist das Lüftungsgerät 1 in unmittelbarer Nähe zu dem Ablufteinlass 13 eine erste Rohrleitung 17 und eine zweite Rohrleitung 18 auf, die parallel zueinander, hier übereinander, quer zu der Längs- bzw. Erstreckungsrichtung des Durchgangskanals 16 angeordnet sind. Die erste und zweite Rohrleitung 17, 18 sind mit einem zugehörigen ersten und zweiten Anschluss 19, 21 verbunden, die außen an dem Wandelement 6a des Gehäusedeckels 6 angeordnet sind.

Die erste Rohrleitung 17 ist zur Beimischung von Außenluft als Frischluft zu der abgeführten Abluft vorgesehen. Sie begrenzt einen hier kreiszylindrischen Außenluftkanal 22, der mit dem ersten bzw. Außenluftanschluss 19 strömungsmäßig verbunden ist, um Außenluft aufzunehmen, und der zu einem in den Figuren 3 und 4 näher veranschaulichten Außenluftaustritt 23 führt, durch den Außenluft in den Durchgangskanal 16 ausgegeben wird. Wie ersichtlich, ist der Außenluftaustritt 23 auf der dem Ablufteinlass 13 abgewandten Seite der ersten Rohrleitung 17 derart angeordnet, dass er in einer in Figur 4 durch einen Pfeil 24 angezeigten Strömungsrichtung entlang des Durchgangskanals 16 ausgerichtet ist.

Genauer gesagt, ist der Außenluftaustritt 23 auf einen in Längs- und Umfangsrichtung der ersten Rohrleitung 17 begrenzten Bereich beschränkt, der auf der stromabwärtigen Seite der ersten Rohrleitung 18 angeordnet ist, so dass die durch den Außenluftaustritt 23 austretende Außenluft, abgesehen von einer vertikalen Komponente, nur mit einer horizontalen Strömungskomponente austreten kann, die in stromabwärtige Richtung 24 zeigt. Bei der dargestellten kreisförmigen Querschnittsform der ersten Rohrleitung 17 sollte hierzu die in Figur 4 angezeigte Öffnungsweite α des Außenluftaustritts, die in Bezug auf eine durch ein Zentrum des Außenluftkanals 22 verlaufende horizontale Ebene symmetrisch ist, weniger als 180°, vorzugsweise weniger als 140°, jedoch vorzugsweise mehr als etwa 90° betragen. In dem dargestellten Ausführungsbeispiel beträgt der Öffnungswinkel α in etwa 110°.

Prinzipiell könnte der Außenluftaustritt 23 durch einen Durchbruch in der ersten Rohrleitung 17 gebildet sein. Wie aus den Figuren 3 und 4 hervorgeht, ist dieser in der hier dargestellten bevorzugten Ausführungsform ein perforierter Bereich 26, der durch eine regelmäßige Anordnung oder Matrix von Lochungen, die die Wand der ersten Rohrleitung 17 durchsetzen, gebildet ist. Diese Perforation 26 ermöglicht es, die Außenluft in Form einer turbulenzarmen, im Wesentlichen laminaren Strömung, wie sie durch die Strömungspfeile 27 in Figur 4 angezeigt ist, in den Durchgangskanal 16 auszublasen.

Die zweite Rohrleitung 18 bildet einen Fortluftkanal 28 zur Abführung eines Teils der zuströmenden Abluft als Fortluft, wobei sich der Fortluftkanal 28 von einem Fortlufteintritt 29 aus durch die zweite Rohrleitung 18 hindurch bis zu dem zweiten oder Fortluftanschluss 21 erstreckt, der durch den Gehäusedeckel 6 nach außen führt. Ähnlich wie der Außenluftaustritt 23 ist auch der Fortlufteintritt 29 durch einen perforierten Bereich 31 gebildet, der durch eine regelmäßige Anordnung oder Matrix von Lochungen in der Wand der zweiten Rohrleitung 18 in einem in Längs- und Umfangsrichtung der Rohrleitung 18 begrenzten Abschnitt definiert ist. Die um eine waagrechte Ebene durch ein Zentrum des Fortluftkanals 28 symmetrische Öffnungsweite β des Fortlufteintritts 29 ist ebenfalls kleiner als 180°, vorzugsweise kleiner als 140° und vorzugsweise größer als etwa 90° und beträgt hier in etwa 110°.

Jedoch ist der Fortlufteintritt 29 zu der Strömungsrichtung 24 entgegengesetzt ausgerichtet, so dass er dem Ablufteinlass 13 und der zuströmenden Abluft, die in Fig. 4 durch einen Strömungspfeil 32 angezeigt ist, zugewandt ist. Somit sind der Fortlufteintritt 29 und der Außenluftaustritt 23 auf gegenüberliegenden Seiten einer durch die Zentren der Kanäle 22, 28 verlaufenden vertikalen Ebene angeordnet und in entgegengesetzte Richtungen ausgerichtet, so dass im Betrieb kein Kurzschluss zwischen der Außenluft- und der Fortluftströmung auftritt.

Der durch den Fortlufteintritt 29 in den Fortluftkanal 28 eintretende Anteil der Abluft, der die Fortluft bildet, ist in Fig. 4 durch Strömungspfeile 33 angedeutet. Der die beiden Rohrleitungen 17, 18 passierende Anteil der Abluft 32 gemeinsam mit der beigemischten Außenluft 27 strömt als in Fig. 4 durch einen Strömungspfeil 34 angezeigte Zuluft in Strömungsrichtung 24 weiter durch den Durchgangskanal 16.

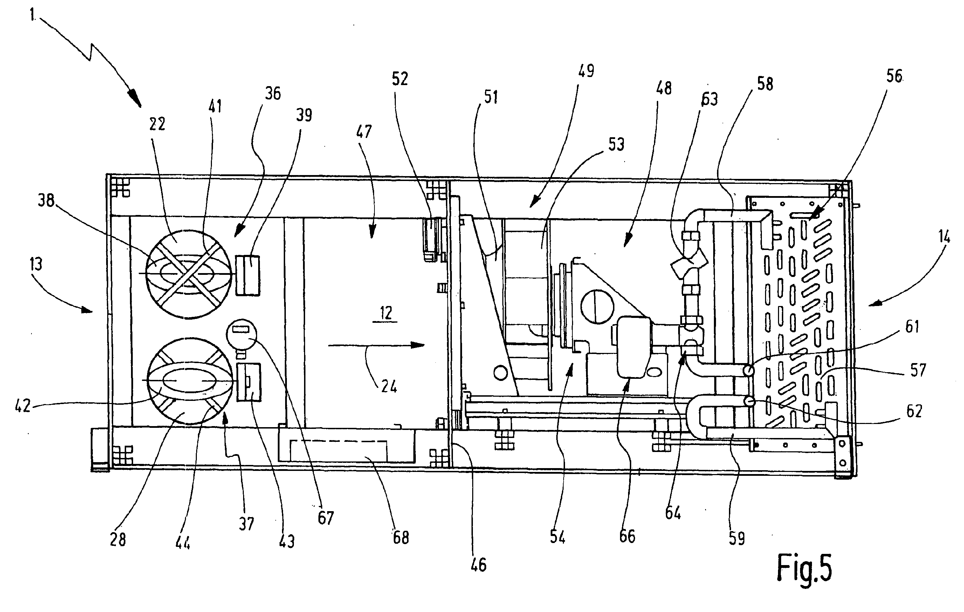

Wie insbesondere aus den Figuren 3 und 5 ersichtlich, ist sowohl dem Außenluftkanal 22 als auch dem Fortluftkanal 28 jeweils ein Volumenstromregler 36, 37 zugeordnet. Der Volumenstromregler 36 für die Außenluft 27 weist eine in dem Außenluftkanal 22 angeordnete veränderbare Durchflussbegrenzungseinrichtung 38, die hier durch eine verstellbare Drosselklappe gebildet ist, auf, die zur variablen Drosselung des Volumenstroms in dem Außenluftkanal 22 dient. Zur Verstellung der Drosselklappe 38 ist dieser ein Aktuator 39 zugeordnet, der vorzugsweise als ein steuerbarer elektromotorischer Stellantrieb ausgebildet ist. Zur genauen Regelung des Volumenstroms weist der Volumenstromregler 26 ferner einen Differenzdrucksensor 41 auf, der den Wirkdruck in dem Außenluftkanal 27 aufnimmt. Der Differenzdrucksensor 41 ist hier in einfacher und kostengünstiger Weise durch ein Messkreuz gebildet, wobei auch andere geeignete Messeinrichtungen, wie eine Venturidüse, Messblende, Messdüse oder dgl., verwendet werden könnten. Der Differenzdrucksensor 41 sendet die erfassten Druckmesswerte zu einer Steuereinrichtung, die die Messwerte auswertet und den Aktuator 39 geeignet ansteuert, um die Drosselklappe 38 zur Erreichung eines vorgegebenen Volumenstroms in dem Außenluftkanal 22 geeignet zu betätigen. Die Steuereinrichtung ist an späterer Stelle in größeren Einzelheiten beschrieben.

Der Volumenstromregler 37 für die Fortluft 33 weist ebenfalls eine variable Durchflussbegrenzungseinrichtung 42 auf, die durch eine verstellbare Drosselklappe gebildet ist, die in dem Fortluftkanal 28 angeordnet ist. Der Drosselklappe 42 ist ein Aktuator 43 in Form eines ansteuerbaren elektromotorischen Stellantriebs 43 zugeordnet, der die Drosselklappe 42 verschwenkt. Ein Differenzdrucksensor 44 in Form eines in dem Fortluftkanal 28 untergebrachten Messkreuzes erfasst den Druck in diesem und sendet die erfassten Messsignale an die Steuereinrichtung.

Bezugnehmend auf die Figuren 2 und 5 ist ersichtlich, dass in einem mittleren Bereich des Durchgangskanals 16 eine Trennwand 46 angeordnet ist, die sich vollständig durch den Durchgangskanal 12 hindurch zwischen der Oberseite 3 und der Unterseite 4 sowie zwischen den beiden Längsseiten 6 und 7 erstreckt. Die Trennwand 46 unterteilt den Innenraum 12 in eine stromaufwärtige Kammer 47 und eine stromabwärtige Kammer 48.

In einem zentralen Bereich der Trennwand 46 ist ein Lüfter oder Ventilator 49 montiert, der eine Einlaufdüse 51 mit einer Volumenstrommesseinrichtung 52 und ein Lüfterrad 53 aufweist. Die Einlaufdüse 51 ist mit ihrer Anströmseite in dem Durchgangskanal 16 entgegengesetzt zu der Strömungsrichtung 24 ausgerichtet, um die zuströmende Zuluft aufzunehmen. Die Volumenstrommesseinrichtung 12 ist durch einen statischen Differenzdruck-Transmitter gebildet, der über die Einlaufdüse 51 den Wirkdruck erfasst und an die Steuereinrichtung sendet.

Das Lüfterrad 53 ist hier Motorlüfterrad, das durch eine drehzahlregelbare Antriebseinrichtung 54, hier insbesondere durch einen bürstenlosen, elektronisch kommutierten Gleichstrommotor (EC-Motor) angetrieben ist. Der EC-Motor 54 ist vorzugsweise mit einer integrierten Elektronik zur Kommutierung versehen.

Obwohl dies in den Figuren nicht im Detail dargestellt ist, ist das Lüfterrad 53 vorzugsweise ein einseitig saugendes, rückwärts gekrümmtes Radiallaufrad, das für den Betrieb ohne Spiralgehäuse durch eine spezielle Schaufelgestaltung mit rotierendem Diffusor optimiert ist, um hohe Wirkungsgrade und ein günstiges akustisches Verhalten zu erzielen.

Wie ferner aus den Figuren 2 und 5 ersichtlich, ist stromabwärts von dem Ventilator 49 in unmittelbarer Nähe zu dem Zuluftauslass 14 eine optionale Kühl-/Heizeinrichtung 56 zur thermischen Behandlung der dem Raum zuzuführenden Zuluft vorgesehen. Die Kühl-/Heizeinrichtung 56 weist hier einen Wasser/Luft-Wärmetauscher oder einen sonstigen Wärmetauscher zum Kühlen/Erwärmen der Zuluft mit einem vorzugsweise flüssigen Wärmeübertragungsmedium auf. Der Wärmetauscher 57 ist ein Lamellenwärmetauscher, obwohl auch andere Bauarten, wie beispielsweise Rippenrohrwärmetauscher, verwendet werden können. Jedenfalls weist der Wärmetauscher 57 Rohre 58, 59 auf, die das Wärmeübertragungsmedium, insbesondere Wasser, dem Wärmetauscher 57 zuführen bzw. von diesem abführen und die jeweils mit einem Vorlaufanschluss 61 bzw. einem Rücklaufanschluss 62 verbunden sind. Der Vorlauf- und der Rücklaufanschluss 61, 62 sind, wie aus Fig. 1 hervorgeht, an der Außenseite des Gehäuses 2, hier insbesondere an dem Gehäusedeckel 6d angeordnet und dienen dem Anschluss einer externen Quelle für das Wärmeübertragungsmedium, insbesondere Wasser.

In dem Rohr 58 ist ein manuelles Einstellventil 63 angeordnet, mit dem ein konstanter Durchfluss des Wärmeübertragungsmediums je nach den besonderen Anforderungen im Voraus eingestellt werden kann. Um die vorgegebene Raumtemperatur im Betrieb je nach Umgebungs- und Betriebsbedingungen genau regeln zu können, ist in dem Rohr 58 ferner ein Regelventil 64 zur Regelung des Durchflusses des Wärmeübertragungsmediums durch den Wärmetauscher 57 angeordnet. Dem Regelventil 64 ist ein Aktuator 66 in Form eines kontinuierlich regelbaren Stellantriebs zugeordnet, der das Regelventil 64 je nach Ansteuerung geeignet einstellt, um einen gewünschten Durchfluss des Wärmeübertragungsmediums für den gewünschten Wärmetransfer auf die hindurchströmende Zuluft zu erzielen, um dadurch die Raumluft geeignet zu temperieren.

Zur Messung der momentanen Raumlufttemperatur ist ein Raumlufttemperaturfühler 67 vorgesehen, der hier vorteilhafterweise bereits in dem Lüftungsgerät 1 integriert ist. Wie insbesondere aus den Figuren 3 und 5 ersichtlich, ist der Temperaturfühler 67 in dem Durchgangskanal 16 stromabwärts von der ersten und der zweiten Rohrleitung 17, 18 in unmittelbarer Nähe zu diesen angeordnet, um die Temperatur der zwischen diesen hindurchströmenden Abluftströmung 32 zu erfassen.

Das erfindungsgemäße Lüftungsgerät 1 ist als ein so genanntes Stand-Alone-Modul konzipiert, das sämtliche erforderliche Hardware- und Softwarekomponenten enthält, die eigenständig, ohne weitere Zusatzgeräte, die Funktion des Lüftungsgerätes erfüllen können. Hierzu weist das Lüftungsgerät 1 eine Steuereinrichtung 68 auf, die hier vorzugsweise durch eine speicherprogrammierbare Steuerung (PLC) gebildet ist, die zur Steuerung und Regelung des Lüftungsgerätes 1 konfiguriert bzw. programmiert und geeignet verdrahtet ist. Obwohl dies in den Figuren nicht dargestellt ist, ist die Steuereinrichtung 68 mit einem Netzteil ausgestattet, das über hier nicht näher dargestellte Stromversorgungskabel mit einem Netzstecker 69 verbunden ist, der zum Anschluss an ein Versorgungsnetz an der Außenseite des Gehäuses 2, hier insbesondere an dem Wandelement 6a (Fig. 1) angeordnet ist. Ferner ist die Steuereinrichtung 68 über eine hier nicht näher dargestellte Datenschnittstelle mit einem an der Außenseite des Gehäusewandelementes 6a angeordneten Datenanschluss 71 verbunden, der auch dem Anschluss eines handelsüblichen Rechners, PCs, Laptops oder dgl., dient. Über diese Datenschnittstelle können auch Parameter für den Betrieb des Lüftungsgerätes eingegeben werden, die dann in einem der Steuereinrichtung 68 zugeordneten Speicher abgelegt und im Betrieb zur Steuerung und Regelung des Lüftungsgerätes 1 verwendet werden.

Wie bereits erwähnt, ist die Steuereinrichtung 68 ferner über eine hier nicht veranschaulichte innere Verdrahtung mit den vorerwähnten Sensoren, insbesondere den Differenzdrucksensoren 41, 44, der Volumenmesseinrichtung 52 und dem Temperaturfühler 67 kommunikationsmäßig verbunden, um die Istwerte der jeweils gemessenen Messgrößen von diesen zu erhalten. Ferner ist die Steuereinrichtung 68 mit den entsprechenden Aktuatoren 69, 63, 66 und dem Motor 54 elektrisch verbunden, um diese ansteuern zu können.

Im Übrigen ist, wie aus Fig. 1 hervorgeht, an der Außenseite des Gehäuses 2, an dem Wandelement 6a ein zentraler Schalter 5 vorgesehen, mit dem das Lüftungsgerät bei Inbetriebnahme, zu Wartungszwecken und dgl. bedarfsweise ein- bzw. ausgeschaltet werden kann.

Das erfindungsgemäße Lüftungsgerät ist insbesondere zur Be- und Entlüftung von Reinräumen vorgesehen. In der Regel wird das Gerät in einem Zwischendeckenbereich über dem Reinraum installiert. Eine begehbare Reinraumdecke kann hilfreich sein, ist jedoch nicht zwingend erforderlich. Alle Komponenten des Gerätes sind prinzipiell wartungsfrei. Das Gerät kann auch direkt in einem Reinraum installiert werden. Das Lüftungsgerät 1 ist mit kompletter Hard- und Software ausgestattet und werksseitig voreingestellt und vorkonfiguriert, damit es relativ einfach installiert und in Betrieb genommen werden kann. Insbesondere können sämtliche anwendungsspezifische Parameter, wie z.B. Sollwerte für Volumenströme für beizumischende Außenluft, abzuführende Fortluft und in den Raum zuzuführende Zuluft, der Volumenstromsollwert für das Wärmeübertragungsmedium des Wärmetauschers 37 sowie der Raumtemperatursollwert und ggf. ein Vorgabewert für den Rauminnendruck im Voraus werksseitig vorgegeben werden, so dass sich der Aufwand für die Inbetriebnahme vor Ort auf ein Minimum reduziert. Über den Datenanschluss 71 können aber sämtliche Parameter jederzeit auch nachträglich geändert werden.

Zur Inbetriebnahme wird das Lüftungsgerät 1 über den Netzstecker 39 mit einer Netzversorgung verbunden, und die Vor- und Rücklaufanschlüsse 61, 62 des Lüftungsgerätes 1 werden mit einer geeigneten Quelle, bspw. einer Kühlwasserquelle verbunden. An den Außenluftanschluss 19 wird eine Primärluftversorgung mit frischer Außenluft angeschlossen, und der Fortluftanschluss 21 wird mit einem unter Unterdruck stehenden fortführenden Kanal verbunden.

Je nach Aufstellungsort des Lüftungsgerätes 1 werden ferner der Ablufteinlass 13 und der Zuluftauslass 14 ggf. über geeignete Leitungen mit einer oder mehreren Auslassöffnungen, durch die Abluft aus dem Reinraum abgeführt wird, bzw. mit einer entsprechenden Einlassöffnung, durch die Zuluft dem Raum zugeführt wird, verbunden.

Das insoweit beschriebene und installierte Lüftungsgerät 1 funktioniert wie folgt:
Über den Ablufteinlass 13 wird Abluft 32 aus dem Raum eingesaugt, von der ein Teil als Fortluft 33 über den Fortluftkanal 28 nach außen abgeführt wird. Gleichzeitig wird der den Fortluftkanal 28 passierenden Abluftströmung ein Anteil an Außenluft 27 beigemischt. Die dadurch erhaltene Zuluft wird über den Ventilator 49 dem Raum mit einem definierten, vorgegebenen Volumenstrom zugeführt. Der Ventilator 49 saugt die Luft senkrecht durch die Einlaufdüse 51 aus der saugseitigen Kammer 47 ein und bläst die Zuluft in die druckseitige Kammer 48 hinein. Dabei wird der Volumenstrom durch die Steuereinrichtung 68 vorzugsweise über einen PI-Regelkreis konstant geregelt. Der Istwert des Wirkdrucks der den Ventilator passierenden Luftströmung wird über die Einlaufdüse 51 des Ventilators 49 als Differenzdruck mit der Volumenstrommesseinrichtung 52 erfasst und zu der Steuereinrichtung 68 übermittelt. Die Steuereinrichtung 68 rechnet den Istwert des Differenzdrucks in einen Istwert des Volumenstroms um und bestimmt bei einer Regelabweichung die erforderliche Drehzahl des Lüftermotors 54. Dieser wird anschließend geeignet stufenlos geregelt, um den vorgegebenen Volumenstrom der Zuluft zu erhalten.

Es wird ferner die Menge der dem Lüftungsgerät 1 als Frischluft zugeführten konditionierten Außenluft über den Volumenstromregler 36 für den Außenluftkanal 22 geregelt. Der Sollwert zur Erzielung der gewünschten Luftmenge der Außenluft wird als kontinuierliches Stellsignal von der Steuereinrichtung 68 an den Aktuator 39 ausgegeben. Die Messung des Istwertes des Differenzdrucks in dem Außenluftkanal 22 erfolgt über das dort installierte Messkreuz 41. Der gewählte Sollwert der Außenluftmenge ist vorzugsweise je nach Betriebsart in dem Reinraum, z.B. während der Produktion, im Betriebsbereitschaftsmodus (Standby), etc., jeweils unterschiedlich, aber konstant.

Die Menge der aus dem Raum abgeführten Fortluft wird über den Volumenstromregler 37 für den Fortluftkanal 28 geregelt. Der Sollwert für die Fortluftmenge wird als kontinuierliches Stellsignal von der Steuereinrichtung 68 an den Aktuator 43 ausgegeben. Die Messung des Istwertes erfolgt über das in dem Fortluftkanal 28 installierte Messkreuz 44. Der Sollwert der abzuführenden Fortluftmenge ist wiederum je nach Betriebsart, während der Produktion, im Standby-Modus, etc. jeweils unterschiedlich, aber konstant.

Die Raumtemperatur wird über den Wärmetauscher 57 konditioniert. Der Stellantrieb 66 des Regelventils 64 für das Wärmeübertragungsmedium in dem Vorlaufrohr 58 wird von der Steuereinrichtung 68 über einen Temperaturregelkreis, vorzugsweise einen PI-Regelkreis, stetig angesteuert. Der Istwert der Temperatur wird über den Raumlufttemperaturfühler 67 in der saugseitigen Kammer 47 des Gerätes 1 erfasst.

Damit ist ein universelles, kompaktes Lüftungsgerät 1 geschaffen, das in der Lage ist, im Wesentlichen alle erforderlichen Garantiewerte für Reinräume unterschiedlicher Reinheitsklassen herzustellen und aufrechtzuerhalten. Das Gerät 1 enthält alle hierfür erforderlichen Komponenten in platzsparender und strömungsgünstiger Anordnung, einschließlich Mittel zur geregelten Beimischung von Außenluft zur Zuluft, bei gleichzeitiger geregelter Abführung von Raumluft als Fortluft.

Mit dem Lüftungsgerät 1 werden innere Wärmelasten aus dem Reinraum abgeführt, während gleichzeitig die gewählte Raumtemperatur kontrolliert, überwacht und geregelt wird. Ferner wird aufbereitete Außenluft zur Frischluftversorgung der Personen in dem Reinraum bzw. als Ersatz für ggf. vorhandene Prozessfortluft zugeführt und beigemischt. Die Luftmenge der beigemischten Außenluft ist elektronisch variabel einstellbar und in einem Beispiel im Bereich von 50 bis 2000 m³/h veränderbar. Der Fortluftvolumenstrom ist ebenfalls elektronisch variabel einstellbar, wodurch eine einfache Justierung von Druckverhältnissen in Reinräumen ermöglicht wird. Durch die erfindungsgemäße Einrichtung und Anordnung des Außenluftaustritts 23 und des Fortlufteintritts 29 wird ein Kurzschluss der Ströme der Außenluft und der Fortluft wirksam vermieden.

Es ist auch möglich, im Lüftungsgerät 1 oder außerhalb dessen einen Drucksensor zu installieren und z.B. über die Datenschnittstelle 71 mit der Steuereinrichtung 68 kommunikationsmäßig zu verbinden, damit die Steuereinrichtung 68 den qualifizierten Raumdruck durch Regelung der Volumenströme genau kontinuierlich kontrollieren und regeln kann.

Es können geeignete Schwebstofffilter vorgesehen sein, um Partikel, Schwebstoffe und Keime aus der Abluft und/oder der Zuluft zu entfernen. Derartige Luftfilter können unmittelbar an dem Ablufteinlass 13 oder dem Zuluftauslass 14, an den zu dem Raum führenden Einlass- und Auslassöffnungen oder an einer beliebigen Stelle in einer Leitung dazwischen angeordnet sein. Durch die inneren Regelkreise in dem Lüftungsgerät 1 wird die jeweils vorgegebene Luftmenge für die beizumischende Außenluft, die abzuführende Fortluft und die zuzuführende Zuluft unabhängig von der Güteklasse und/oder dem Verschmutzungsgrad der Luftfilter stets konstant gehalten. Die Luftmenge ist in einem weiten Bereich variabel, z.B. von 0 bis 6000 m³/h, einstellbar, wobei die Nennluftmenge in einem Beispiel 4200 m³/h beträgt.

Die Steuereinrichtung kann auch eine Logik zur Überwachung der Filterverschmutzung von vor- oder nachgeschalteten Schwebstofffiltern haben. Der Grad der Filterverschmutzung kann anhand der gemessenen Druckwerte, insbesondere auch unter Verwendung eines in dem Reinraum installierten Drucksensors festgestellt werden.

Gemäß einer Weiterbildung kann die Steuereinrichtung auch eine Logik zur Schleusensteuerung von Personen- und/oder Materialschleusen, einschließlich einer Logik zur gegenseitigen Türverriegelung, Ampelanzeige, optionalen Einbindung einer Zutrittskontrolle, etc., enthalten. Das Lüftungsgerät 1 ist flexibel erweiterbar. Insbesondere kann das Lüftungsgerät um weitere Schnittstellen zur Ein- und Ausgabe von Daten, bspw. für einen Kartenleser, Anforderungstaster oder dgl., erweitert werden.

Für größere Reinräume werden in der Regel mehrere Lüftungsgeräte 1 parallel eingesetzt. Über die Datenschnittstelle 71 können die Lüftungsgeräte 1 mit einer Zentraleinheit verbunden und zentral verwaltet werden. Prinzipiell ist die Anzahl der Geräte unbegrenzt. Es können Daten aus den einzelnen Lüftungsgeräten 1 an die Zentraleinheit sowie zu übergeordneten Gebäudeautomationssystemen weitergeleitet werden. Entsprechende Kommunikationsprotokolle, wie z.B. ein TCP-Kommunikationsprotokoll oder dgl., können leicht in die Steuereinrichtung 68 integriert werden.

## Patentansprüche

1. Lüftungsgerät zur Be- und Entlüftung eines Raums, insbesondere Reinraums,
mit einem Gehäuse (2), das einen Innenraum (12) definiert, in dem angeordnet sind:
ein Durchgangskanal (16), der sich von einem an dem Gehäuse (2) vorgesehen Ablufteinlass (13) für aus dem Raum abgeführte Abluft (32) durch den Innenraum (12) hindurch bis zu einem an dem Gehäuse (2) vorgesehenen Zuluftauslass (14) erstreckt, der zur Zuführung von Zuluft (34) zu dem Raum dient,
ein Ventilator (49), der in dem Durchgangskanal (16) angeordnet ist, um Luft aus einer mit dem Ablufteinlass (13) strömungsmäßig verbundenen ansaugseitigen Kammer (47) zu einer mit dem Zuluftauslass (14) strömungsmäßig verbundenen druckseitigen Kammer (48) zu befördern, wobei der Ventilator (49) in seiner Drehzahl regelbar ist;
ein Außenluftkanal (22), der mit einem an dem Gehäuse (2) vorgesehenen Außenluftanschluss (19) strömungsmäßig verbunden ist, um Außenluft (27) aufzunehmen, und der einen Außenluftaustritt (23) aufweist, um Außenluft in den Durchgangskanal (16) auszugeben, wobei in dem Außenluftkanal (22) ein erster Volumenstromregler (36) eingebaut ist;
ein Fortluftkanal (28), der einen mit dem Durchgangskanal (16) strömungsmäßig verbundenen Fortlufteintritt (29), um einen Teil der aus dem Raum abgeführten Abluft (32) als Fortluft (33) aufzunehmen, und einen an dem Gehäuse (2) vorgesehenen Fortluftanschluss (21) aufweist, um die aufgenommene Fortluft aus dem Gehäuse (2) nach außen zu befördern, wobei in dem Fortluftkanal (28) ein zweiter Volumenstromregler (37) eingebaut ist; und
eine Steuereinrichtung (68) zur Steuerung des Betriebs des ersten und des zweiten Volumenstromreglers (36, 37) und der Drehzahl des Ventilators (49).

2. Lüftungsgerät nach Anspruch 1, **dadurch gekennzeichnet, dass** das Gehäuse (2) eine längliche quaderförmige Form mit einer Oberseite (3), einer Unterseite (4), einer ersten und einer zweiten Längsseite (6, 7), die einander gegenüberliegen und die Oberseite (3) mit der Unterseite (4) verbinden, und mit einander gegenüberliegenden Schmalseiten (8, 9) aufweist, die wenigstens teilweise offen ausgebildet sind, um den Ablufteinlass (13) bzw. den Zuluftauslass (14) zu bilden, zwischen denen der Duchgangskanal (16) in Längsrichtung des Gehäuses (2) verläuft.

3. Lüftungsgerät nach einem der vorhergehenden Ansprüche, **dadurch gekennzeichnet, dass** das Gehäuse (2) eine tragende Rahmenkonstruktion (11) aus Leichtmetall und Gehäusedeckel (3, 4, 6, 7, 8, 9) aufweist, die dazu dienen, den Innenraum (12) nach außen dichtend zu verschließen und die aus einem reinraumtauglichen Material, insbesondere aus Schichtpressstoffplatten ausgebildet sind.

4. Lüftungsgerät nach einem der vorhergehenden Ansprüche, **dadurch gekennzeichnet, dass** der Ventilator (49) zentral an einer Trennwand (46) montiert ist, die sich quer durch den Durchgangskanal (16) erstreckt und die ansaugseitige Kammer (47) von der druckseitigen Kammer (48) trennt, wobei der Ventilator (49) eine Einlaufdüse (51) aufweist, die entgegengesetzt zu der Strömungsrichtung (24) der zuströmenden Luft ausgerichtet ist.

5. Lüftungsgerät nach einem der vorhergehenden Ansprüche, **dadurch gekennzeichnet, dass** der Ventilator (49) eine drehzahlregelbare Antriebseinrichtung (54) aufweist, die vorzugsweise durch einen EC-Motor gebildet ist und betriebsmäßig mit der Steuereinrichtung (68) gekoppelt ist.

6. Lüftungsgerät nach einem der vorhergehenden Ansprüche, **dadurch gekennzeichnet, dass** der Ventilator (49) eine Messeinrichtung (52) zur Messung einer den Volumenstroms der den Ventilator (49) passierenden Luft kennzeichnenden Größe aufweist, wobei die Messeinrichtung (52) mit der Steuereinrichtung (68) kommunikationsmäßig verbunden ist.

7. Lüftungsgerät nach einem der vorhergehenden Ansprüche, **dadurch gekennzeichnet, dass** der Außenluftkanal (22) und der Fortluftkanal (28) durch Rohrleitungen (17, 18) gebildet sind, die in der Nähe der Ablufteinlasses (13) angeordnet sind, sich quer durch den Durchgangskanal (16) erstrecken und vorzugsweise parallel zueinander ausgerichtet sind.

8. Lüftungsgerät nach einem der vorhergehenden Ansprüche, **dadurch gekennzeichnet, dass** der Außenluftaustritt (23) und der Fortlufteintritt (29) derart eingerichtet und angeordnet sind, dass bei gleichzeitiger Abführung von Raumluft als Fortluft (33) Außenluft (27) der Abluft beigemischt werden kann, ohne dass ein Kurzschluss der Luftströme (27, 33) eintritt.

9. Lüftungsgerät nach einem der vorhergehenden Ansprüche, **dadurch gekennzeichnet, dass** der Außenluftaustritt (23) durch eine erste Perforation (26) in einer den Außenluftkanal (22) bildenden ersten Rohrleitung (17) und der Fortlufteintritt (29) durch eine zweite Perforation (31) in einer den Fortluftkanal (28) bildenden zweiten Rohrleitung (18) gebildet ist, wobei die erste und die zweite Perforation (26) sich über einen Umfangsbereich der jeweiligen ersten bzw. zweiten Rohrleitung (17, 18), der jeweils kleiner ist 180°, erstrecken und in entgegengesetzte Richtungen längs des Durchgangskanals (16) ausgerichtet sind.

10. Lüftungsgerät nach einem der vorhergehenden Ansprüche, **dadurch gekennzeichnet, dass** der erste und der zweite Volumenstromregler (36, 37) jeweils eine verstellbar Drosselklappe (38, 42) in dem Außenluftkanal (22) bzw. dem Fortluftkanal (28) zur Drosselung des Volumenstroms in diesem, einen Aktuator (39, 43) zur Betätigung der jeweiligen Drosselklappe (38, 42), der mit der Steuereinrichtung (68) betriebsmäßig gekoppelt ist, um Stellsignale von dieser zu empfangen, und einen Differenzdrucksensor (41, 44) zur Erfassung eines den jeweiligen Volumenstrom kennzeichnenden Differenzdrucks und zur Übertragung der jeweiligen erfassten Messwerte zu der Steuereinrichtung (68) aufweisen.

11. Lüftungsgerät nach einem der vorhergehenden Ansprüche, **dadurch gekennzeichnet, dass** es eine Kühl-/Heizeinrichtung (56) zur thermischen Behandlung der Zuluft (34) aufweist, wobei die Kühl-/Heizeinrichtung (56) in dem Durchgangskanal (16) stromabwärts von dem Ventilator (49) angeordnet ist.

12. Lüftungsgerät nach Anspruch 11, **dadurch gekennzeichnet, dass** die Kühl-/Heizeinrichtung (56) einen Wärmetauscher (57) zum Kühlen/Erwärmen mit einem vorzugsweise flüssigen Wärmeübertragungsmedium aufweist, der über Rohre (58, 59) mit einem an dem Gehäuse (2) angeordneten Vorlauf- und Rücklaufanschluss (61) verbunden ist, ein Regelventil (64) zur Regelung des Durchflusses des Wärmeübertragungsmediums und einen von der Steuereinrichtung (68) ansteuerbaren Aktuator (66) zur Stellung des Regelventils (64) aufweist.

13. Lüftungsgerät nach einem der Anspruch 12, **dadurch gekennzeichnet, dass** ein Temperaturfühler (67) vorgesehen ist, der in dem Durchgangskanal (16) angeordnet ist, um die Temperatur der Abluft zu erfassen und der Steuereinrichtung (68) mitzuteilen, wobei die Steuereinrichtung eine Steuerlogik aufweist, um auf der Basis der erfassten Temperaturmesswerte den Aktuator (66) des Regelventils (64) zur Regelung der Raumtemperatur geeignet anzusteuern.

14. Lüftungsgerät nach einem der vorhergehenden Ansprüche, **dadurch gekennzeichnet, dass** es eine Datenschnittstelle (71) zur Eingabe von Parametersollwerten für die Steuereinrichtung (68) aufweist, zu denen wenigstens die Sollwerte für den Volumenstrom der Zuluft, die Raumtemperatur, die beizumischende Außenluftmenge und die abzuführende Fortluftmenge sowie optional den Raumdruck gehören.

15. Lüftungsgerät nach einem der vorhergehenden Ansprüche, **dadurch gekennzeichnet, dass** es ferner Filtermittel zur Filterung der abgeführten Abluft und/oder der zugeführten Zuluft aufweist.

## Claims

1. Ventilation device for supplying air to and extracting air from a room, in particular a cleanroom,
comprising a housing (2) which defines an interior (12) in which the following are arranged:
a through-duct (16) which extends from a waste air inlet (13) provided on the housing (2) for waste air (32) extracted from the room, through the interior (12), to a supply air outlet (14) which is provided on the housing (2) and which serves for feeding supply air (34) to the room;
a fan (49), which is arranged in the through-duct (16), for conveying air from a suction-side chamber (47), which is connected in flow terms to the waste air inlet (13), to a pressure-side chamber (48), which is connected in flow terms to the supply air outlet (14), the speed of the fan (49) being adjustable;
an outside air duct (22), which is connected in flow terms to an outside air connection (19) provided on the housing (2), for receiving outside air (27), said outside air duct having an outside air outlet (23) for discharging outside air into the through-duct (16), a first volume flow regulator (36) being installed in the outside air duct (22);
an exhaust air duct (28), which has an exhaust air inlet (29) connected in flow terms to the through-duct (16) for receiving a portion of the waste air (32) discharged from the room as exhaust air (33), and an exhaust air connection (21) provided on the housing (2) for conveying the received exhaust air out of the housing (2) to the outside, a second volume flow regulator (37) being installed in the exhaust air duct (28); and
a control device (68) for controlling the operation of the first and second volume flow regulator (36, 37) and the speed of the fan (49).

2. Ventilation device according to claim 1, **characterized in that** the housing (2) has an elongate cuboid shape with an upper side (3), an underside (4), a first and a second longitudinal side (6, 7) which lie opposite one another and which connect the upper side (3) to the underside (4), and narrow sides (8, 9) which are located opposite one another and which are configured to be at least partially open so as to form respectively the waste air inlet (13) and the supply air outlet (14), between which the through-duct (16) runs in the longitudinal direction of the housing (2).

3. Ventilation device according to any of the preceding claims, **characterized in that** the housing (2) has a load-bearing frame construction (11) made of light metal and housing covers (3, 4, 6, 7, 8, 9) which serve to close the interior (12) in such a way as to be sealed off from the outside and which are made of a material suitable for cleanroom purposes, in particular of high-pressure plastic laminate.

4. Ventilation device according to any of the preceding claims, **characterized in that** the fan (49) is mounted centrally on a separating wall (46) which extends transversely through the through-duct (16) and which separates the suction-side chamber (47) from the pressure-side chamber (48), the fan (49) having an inflow nozzle (51) which is oriented opposite to the flow direction (24) of the inflowing air.

5. Ventilation device according to any of the preceding claims, **characterized in that** the fan (49) has a speed-adjustable drive device (54) which is preferably formed by an EC motor and is operatively coupled to the control device (68).

6. Ventilation device according to any of the preceding claims, **characterized in that** the fan (49) has a measuring device (52) for measuring a parameter characterizing the volume flow of the air passing through the fan (49), the measuring device (52) being communicatively connected to the control device (68).

7. Ventilation device according to any of the preceding claims, **characterized in that** the outside air duct (22) and the exhaust air duct (28) are formed by pipes (17, 18) which are arranged in the vicinity of the waste air inlet (13), extend transversely through the through-duct (16) and are preferably oriented parallel to one another.

8. Ventilation device according to any of the preceding claims, **characterized in that** the outside air outlet (23) and the exhaust air inlet (29) are designed and arranged in such a way that, while simultaneously extracting room air as exhaust air (33), outside air (27) can be admixed with the waste air without any short-circuiting of the air flows (27, 33) taking place.

9. Ventilation device according to any of the preceding claims, **characterized in that** the outside air outlet (23) is formed by a first perforation (26) in a first pipe (17) forming the outside air duct (22) and the exhaust air inlet (29) is formed by a second perforation (31) in a second pipe (18) forming the exhaust air duct (28), the first and the second perforation (26) extending over a circumferential range of the respective first and second pipe (17, 18) that is in each case less than 180° and being oriented in opposite directions along the through-duct (16).

10. Ventilation device according to any of the preceding claims, **characterized in that** the first and the second volume flow regulator (36, 37) respectively comprise an adjustable throttle valve (38, 42) in the outside air duct (22) and the exhaust air duct (28), for throttling the volume flow therein, an actuator (39, 43) for actuating the respective throttle valve (38, 42), said actuator being operatively coupled to the control device (68) in order to receive actuating signals from the latter, and a differential pressure sensor (41, 44) for detecting a differential pressure characterizing the respective volume flow and for transmitting the respective detected measured values to the control device (68).

11. Ventilation device according to any of the preceding claims, **characterized in that** it has a cooling/heating device (56) for thermally treating the supply air (34), the cooling/heating device (56) being arranged downstream of the fan (49) in the through-duct (16).

12. Ventilation device according to claim 11, **characterized in that** the cooling/heating device (56) has a heat exchanger (57) for cooling/heating by means of a preferably liquid heat transfer medium, said heat exchanger being connected via pipes (58, 59) to a forward and return flow connection (61) arranged on the housing (2), a regulating valve (64) for regulating the flow of the heat transfer medium, and an actuator (66) for setting the regulating valve (64), said actuator being able to be actuated by the control device (68).

13. Ventilation device according to claim 12, **characterized in that** a temperature sensor (67) is provided, which is arranged in the through-duct (16), for detecting the temperature of the waste air and reporting said temperature to the control device (68), the control device having control logic for actuating the actuator (66) of the regulating valve (64) in a suitable manner, on the basis of the detected measured temperature values, for regulating the room temperature.

14. Ventilation device according to any of the preceding claims, **characterized in that** it has a data interface (71) for inputting parameter nominal values for the control device (68), said values including at least the nominal values for the volume flow of the supply air, the room temperature, the quantity of outside air to be admixed, and the quantity of exhaust air to be discharged, as well as optionally the room pressure.

15. Ventilation device according to any of the preceding claims, **characterized in that** it further has filter means for filtering the extracted waste air and/or the supplied supply air.

## Revendications

1. Appareil de ventilation destiné à l'aération et l'évacuation d'air d'un local, en particulier d'une salle blanche,
comprenant un boîtier (2) qui définit un espace intérieur (12), dans lequel sont disposés :
un conduit de passage (16) qui s'étend à partir d'une entrée d'air vicié (13), prévue sur le boîtier (2) pour l'air vicié (32) évacué du local, à travers l'espace intérieur (12) et jusqu'à une sortie d'air frais (14) qui est prévue sur le boîtier (2) et sert à amener de l'air frais (34) au local;
un ventilateur (49) qui est disposé dans le conduit de passage (16) pour acheminer de l'air depuis une chambre côté aspiration (47), reliée du point de vue de l'écoulement à l'entrée d'air vicie (13), à une chambre côté refoulement (48), reliée du point de vue de l'écoulement à la sortie d'air frais (14), le ventilateur (49) pouvant être réglé en ce qui concerne sa vitesse de rotation;
un conduit d'air extérieur (22) qui est relié du point de vue de l'écoulement à un raccord d'air extérieur (19) prévu sur le boîtier (2) pour recevoir de l'air extérieur (27), et qui présente une sortie d'air extérieur (23) pour délivrer de l'air extérieur dans le conduit de passage (16), un premier régulateur de débit volumique (36) étant monté dans le conduit d'air extérieur (22);
un conduit d'air rejeté (28) qui présente une entrée d'air rejeté (29), reliée du point de vue de l'écoulement au conduit de passage (16) pour recevoir en tant qu'air rejeté (33) une partie de l'air vicié (32) évacué du local, et un raccord d'air rejeté (21) prévu sur le boîtier (2) pour transporter vers l'extérieur du boîtier (2) l'air rejeté reçu, un deuxième régulateur de débit volumique (37) étant monté dans le conduit d'air rejeté (28); et
un dispositif de commande (68) pour la commande du fonctionnement du premier et du deuxième régulateur de débit volumique (36, 37) et de la vitesse de rotation du ventilateur (49).

2. Appareil de ventilation selon la revendication 1, **caractérisé en ce que** le boîtier (2) présente une forme parallélépipédique allongée avec une face supérieure (3), une face inférieure (4), un premier et un deuxième grand côté (6, 7) qui sont situés en vis-à-vis l'un de l'autre et relient la face supérieure (3) à la face inférieure (4), et avec des petits côtés (8, 9) qui sont situés en vis-à-vis l'un de l'autre et sont réalisés en étant ouverts au moins en partie pour former respectivement l'entrée d'air vicie (13) et la sortie d'air frais (14), entre lesquelles le conduit de passage (16) s'étend dans le sens longitudinal du boîtier (2).

3. Appareil de ventilation selon l'une des revendications précédentes, **caractérisé en ce que** le boîtier (2) présente une structure de châssis (11) portante en métal léger et un couvercle de boîtier (3, 4, 6, 7, 8, 9) qui servent à fermer l'espace intérieur (12) de façon étanche vis-à-vis de l'extérieur et qui sont réalisés à partir d'un matériau adapté aux salles blanches, notamment à partir de plaques stratifiées.

4. Appareil de ventilation selon l'une des revendications précédentes, **caractérisé en ce que** le ventilateur (49) est monté de façon centrale sur une cloison de séparation (46) qui s'étend en travers du conduit de passage (16) et sépare la chambre côté aspiration (47) de la chambre côté refoulement (48), le ventilateur (49) présentant une buse d'entrée (51) qui est orientée dans le sens opposé au sens d'écoulement (24) de l'air arrivant.

5. Appareil de ventilation selon l'une des revendications précédentes, **caractérisé en ce que** le ventilateur (49) présente un dispositif d'entraînement (54) à vitesse de rotation réglable, qui est constitué de préférence d'un moteur EC et est couplé du point de vue du fonctionnement au dispositif de commande (68).

6. Appareil de ventilation selon l'une des revendications précédentes, **caractérisé en ce que** le ventilateur (49) présente un dispositif de mesure (52) pour mesurer une grandeur caractérisant le débit volumique de l'air passant dans le ventilateur (49), le dispositif de mesure (52) étant relié du point de vue de la communication au dispositif de commande (68).

7. Appareil de ventilation selon l'une des revendications précédentes, **caractérisé en ce que** le conduit d'air extérieur (22) et le conduit d'air rejeté (28) sont constitués de conduites (17, 18) qui sont disposées à proximité de l'entrée d'air vicie (13), s'étendent en travers du conduit de passage (16) et sont orientées de préférence parallèlement l'une à l'autre.

8. Appareil de ventilation selon l'une des revendications précédentes, **caractérisé en ce que** la sortie d'air extérieur (23) et l'entrée d'air rejeté (29) sont agencées et disposées de manière telle que lors de l'évacuation simultanée d'air ambiant en tant qu'air rejeté (33) de l'air extérieur (27) puisse être mélangé à l'air vicié, sans qu'il n'y ait de court-circuit des flux d'air (27, 33).

9. Appareil de ventilation selon l'une des revendications précédentes, **caractérisé en ce que** la sortie d'air extérieur (23) est réalisée par une première perforation (26) dans une première conduite (17) formant le conduit d'air extérieur (22), et l'entrée d'air rejeté (29) est réalisée par une deuxième perforation (31) dans la deuxième conduite (18) formant le conduit d'air rejeté (28), la première et la deuxième perforation (26) s'étendant sur une zone périphérique respectivement de la première et de la deuxième conduite (17, 18), qui sont chacune inférieure à 180°, et sont orientées dans des directions opposées le long du conduit de passage (16).

10. Appareil de ventilation selon l'une des revendications précédentes, **caractérisé en ce que** le premier et le deuxième régulateur de débit volumique (36, 37) présentent chacun un clapet d'étranglement (38, 42) réglable dans le conduit d'air extérieur (22) ou le conduit d'air rejeté (28), afin de réduire le débit volumique dans celui-ci, un actionneur (39, 43) qui est destiné à actionner le clapet d'étranglement (48, 42) respectif et est couplé du point de vue du fonctionnement au dispositif de commande (68) pour recevoir des signaux de réglage de celui-ci, et un capteur de pression différentielle (41, 44) destiné à détecter une pression différentielle caractérisant le débit volumique respectif et à transmettre les valeurs mesurées respectives recueillies au dispositif de commande (68).

11. Appareil de ventilation selon l'une des revendications précédentes, **caractérisé en ce qu'**il présente un dispositif de refroidissement/chauffage (56) destiné au traitement thermique de l'air frais (34), le dispositif de refroidissement/chauffage (56) étant disposé dans le conduit de passage (16), en aval du ventilateur (49).

12. Appareil de ventilation selon la revendication 11, **caractérisé en ce que** le dispositif de refroidissement/chauffage (56) présente un échangeur de chaleur (57) destiné au refroidissement/chauffage avec un fluide de transmission de chaleur de préférence liquide, qui est relié par des tuyaux (58, 59) à un raccord aller et retour (61) disposé sur le boîtier (2), une vanne de régulation (64), destinée à réguler le débit du fluide de transmission de chaleur, et un actionneur (66) pouvant être activé par le dispositif de commande (68) et destiné à manoeuvrer la vanne de régulation (64).

13. Appareil de ventilation selon la revendication 12, **caractérisé en ce qu'**il est prévu un capteur de température (67) qui est disposé dans le conduit de passage (16) pour mesurer la température de l'air vicié et l'indiquer au dispositif de commande (68), le dispositif de commande présentant une logique de commande pour activer l'actionneur (66) de la vanne de régulation (64) de façon appropriée pour la régulation de la température du local, sur la base des valeurs de température mesurées recueillies.

14. Appareil de ventilation selon l'une des revendications précédentes, **caractérisé en ce qu'**il présente une interface de données (71) pour la saisie de valeurs de consignes de paramètres pour le dispositif de commande (68), qui englobent au moins les valeurs de consigne pour le débit volumique de l'air frais, la température du local, la quantité d'air extérieur devant être ajoutée, et la quantité d'air rejeté à évacuer, ainsi que, de manière facultative, la pression du local.

15. Appareil de ventilation selon l'une des revendications précédentes, **caractérisé en ce qu'**il présente en outre des moyens de filtration pour filtrer l'air vicié évacué et/ou l'air frais amené.
